# EUROPÄISCHE PATENTSCHRIFT

(11) **EP 1 218 461 B1**
(45) Veröffentlichungstag und Bekanntmachung des Hinweises auf die Patenterteilung: **21.12.2005**
(21) Anmeldenummer: 00960519.7
(22) Anmeldetag: 24.08.2000
(51) Int. Cl.: C09D 175/16, C08F 290/06

(54) **VERFAHREN ZUR HERSTELLUNG KRATZFESTER, WITTERUNGSSTABILER BESCHICHTUNGEN**
METHOD FOR PRODUCING SCRATCH RESISTANT, WEATHERPROOF COATINGS
PROCEDE DE REALISATION DE REVETEMENTS ANTIRAYURES INSENSIBLES AUX CONDITIONS ATMOSPHERIQUES

(30) Priorität: 25.08.1999 DE 19940313
(43) Veröffentlichungstag der Anmeldung: 03.07.2002
(73) Patentinhaber: BASF Aktiengesellschaft, 67056 Ludwigshafen (DE)
(72) Erfinder: JAWOREK, Thomas, 67169 Kallstadt (DE); SCHWALM, Reinhold, D-67157 Wachenheim (DE)
(74) Vertreter: Kinzebach, Werner
(86) Internationale Anmeldenummer: PCT/EP2000/008283
(87) Internationale Veröffentlichungsnummer: WO 2001/014482

(56) Entgegenhaltungen:
- EP-A- 0 508 409
- WO-A-94/29398
- US-A- 6 146 288
- DATABASE WPI Section Ch, Week 198842 Derwent Publications Ltd., London, GB; Class A82, AN 1988-295328 XP002156453 & JP 63 214375 A (SUMITOMO METAL IND LTD), 7. September 1988 (1988-09-07)
- PATENT ABSTRACTS OF JAPAN vol. 017, no. 594 (C-1126), 29. Oktober 1993 (1993-10-29) & JP 05 179156 A (MITSUBISHI RAYON CO LTD), 20. Juli 1993 (1993-07-20)

## Beschreibung

Die Erfindung betrifft ein Verfahren zur Herstellung kratzfester, witterungsstabiler Beschichtungen, auf der Basis UV-härtbarer Beschichtungsmittel.

Beschichtungsmittel, die durch UV-Strahlung aushärten, werden in der Technik für die Herstellung hochwertiger Beschichtungen eingesetzt. Bei strahlungshärtbaren Beschichtungsmitteln handelt es sich in der Regel um fließfähige Zubereitungen auf Basis von Polymeren oder Oligomeren mit vernetzungsaktiven Gruppen, die bei Einwirkung von UV-Strahlung eine Vernetzungsreaktion miteinander eingehen. Hierdurch kommt es zur Bildung eines hochmolekularen Netzwerks und damit zur Ausbildung eines festen, polymeren Films. Im Unterschied zu den bislang häufig eingesetzten thermisch härtbaren Beschichtungsmitteln können strahlungshärtbare Beschichtungsmittel frei von Lösungs- oder Dispergiermitteln eingesetzt werden. Zudem zeichnen sie sich durch sehr kurze Härtungszeiten aus, was insbesondere bei der kontinuierlichen Verarbeitung in Lackierstraßen von Vorteil ist.

Durch UV-Strahlung härtbare Beschichtungsmittel weisen in der Regel ein hohe Oberflächenhärte und eine gute Chemikalienresistenz auf. Seit einiger Zeit besteht der Wunsch nach Beschichtungen, die eine hohe Kratzfestigkeit aufweisen, damit die Beschichtung beispielsweise beim Reinigen nicht beschädigt wird und ihren Glanz verliert. Gleichzeitig sollen die Beschichtungen die bei strahlungsgehärteten Beschichtungen üblicherweise erreichten Eigenschaften beibehalten.

In der Literatur wurden verschiedentlich die physikalischen Vorgänge bei der Erzeugung von Kratzern und die Zusammenhängen zwischen der Kratzfestigkeit und anderen physikalischen Kenngrößen der Beschichtung beschrieben (zu kratzfesten Beschichtungen siehe z.B. J. L. Courter, 23^{rd} Annual International Waterborne, High-Solids and Powder Coatings Symposium, New Orleans 1996).

Für die quantitative Beurteilung der Kratzfestigkeit einer Beschichtung sind verschiedene Prüfmethoden beschrieben. Beispiele sind die Prüfung mittels des BASF-Bürstentests (P. Betz und A. Bartelt, Progress in Organic Coatings, 22 (1993), Seite 27 - 37), mittels der Waschbürstenanlage der Firma AMTEC oder verschiedene Prüfmethoden analog Ritzhärtemessungen, wie sie beispielsweise von G. Jüttner, F. Meyer, G. Menning, Kunststoffe 1989, 88, 2038 - 42, beschrieben werden. Ein weiterer Test zur Bestimmung der Kratzfestigkeit ist in European Coatings Journal 4/99, S. 100 bis 106 beschrieben.

Nach dem heutigen Stand der Entwicklung werden drei Wege zu kratzfesten Oberflächen diskutiert, die grundsätzlich auch auf UV-härtende Systeme übertragbar sind.

Der erste Weg beruht auf der Härte des Beschichtungsmaterials. Da ein härterer Stoff durch einen weicheren nicht verkratzt werden kann, ist eine hohe Härte eine hinreichende Voraussetzung für Kratzfestigkeit. Die hohe Härte geht jedoch zu Lasten anderer Eigenschaften, wie der Eindringtiefe oder der Haftung, die für Beschichtungsmaterialien unerläßlich sind.

Der zweite weg beruht darauf, das Beschichtungsmaterial so zu wählen, dass es beim Verkratzen im reversiblen Deformationsbereich beansprucht wird. Es handelt sich um Materialien, die eine hohe reversible Deformation zulassen. Der Verwendung von Elastomeren als Beschichtungsmaterial sind jedoch Grenzen gesetzt. Derartige Beschichtungen zeigen meist eine schlechte Chemikalienstabilität. Dieser Ansatz hat in der praktischen Anwendung bisher keine Rolle gespielt.

Ein dritter Ansatz versucht, Beschichtungen mit zähem, d. h. plastischem Deformationsverhalten zu erzeugen und gleichzeitig die beim verkratzen auftretende Schubspannung innerhalb des Beschichtungsmaterials möglichst klein zu halten. Dies gelingt durch Reduktion des Reibungskoeffizienten, z. B. durch Verwendung von wachsen oder Slipadditiven. Lackadditive für UV-härtende Systeme werden beispielsweise in B. Hackl, J. Dauth, M. Dreyer; Farbe & Lack 1997, 103, 32 - 36 beschrieben.

Die JP 63214375 A beschreibt durch UV-Strahlung härtbare Harzzusammensetzungen zur Beschichtung auf metallischen Oberflächen. Die Bestrahlung wird unter Inertgasatmosphäre mit einem Gehalt von weniger als 0,5 Vol.-% Sauerstoff ausgeführt. Als Harze können unter anderem Polyester(meth)acrylat, Polyurethan(meth)acrylat, Epoxy(meth)acrylat, Trimethylolpropanacrylat, Polyethylenglycoldiacrylat, Styrol und Methylacrylat eingesetzt werden.

Die JP 05179156 A betrifft ein Verfahren zur Herstellung einer durch Vernetzung thermisch härtbaren Zusammensetzung, bei dem man ein Urethan(meth)acrylat mit mindestens zwei (Meth)Acrylolyl-Gruppen und gegebenenfalls einer weiteren Komponente unter Zusatz eines radikalischen Polymerisationsinitiators unter Inertgasatmosphäre vernetzt und härtet.

In der US 5,700,576 wird eine uv-härtende, kratzfeste Beschichtung beschrieben, die 1 - 30 Gew.-% eines prepolymeren verdickers mit Thiolgruppen und 20 - 80 Gew.-% eines oder mehrerer polyfunktioneller Acrylate oder Methacrylate sowie verdünner, insbesondere Reaktivverdünner, die eine radikalisch polymerisierbare Gruppe enthalten, Radikalstarter und weitere übliche Additive für die Lackherstellung enthalten. Die Polymerisation und damit Aushärtung der Beschichtung wird durch Bestrahlung mit UV-Licht ausgelöst.

In der EP 0 544 465 B1 wird eine UV-härtbare, kratzfeste Beschichtung beschrieben, in der durch den Einbau von kolloidalem Siliziumdioxid in die Lackmatrix die Härte der Beschichtung erhöht wird, wobei gleichzeitig die Flexibilität der organischen Matrix erhalten bleiben soll. Eine solche kratzfeste Beschichtung enthält 1 - 60 Gew.-% kolloidales Siliziumdioxid, 1 - 50 Gew.-% des Hydrolyseprodukts eines Alkoxysilylacrylats, insbesondere 3-Methacryloyloxypropyltrimethoxysilan, und 25 - 90 Gew.-% Acrylatmonomere, die aus einer Mischung von 20 - 90 Gew.-% Hexandioldiacrylat und 10 - 80 Gew.-% eines monofunktionellen verzweigten oder carbozyklischen Acrylats bestehen, sowie eine ausreichende Menge an Radikalstarter.

Der vorliegenden Erfindung liegt die Aufgabe zugrunde, ein Verfahren zur Herstellung von kratzfesten und witterungsstabilen Beschichtungen auf der Basis UV-härtbarer Beschichtungsmittel zur Verfügung zu stellen.

Die Aufgabe wird überraschenderweise durch ein Verfahren gelöst, bei dem man ein flüssiges, UV-härtbares Beschichtungsmittel auf der Basis von aliphatischen Urethan(meth)acrylat-Prepolymeren auf das zu beschichtende Substrat aufbringt und die noch flüssige Beschichtung anschließend unter weitgehendem Ausschluss von Sauerstoff durch UV-Strahlung aushärtet.

Demnach betrifft die vorliegende Erfindung ein Verfahren zur Herstellung kratzfester Beschichtungen, wobei man wenigstens ein UV-härtbares Beschichtungsmittel, enthaltend als photochemisch vernetzbaren Bestandteil eine Mischung von wenigstens einem aliphatischen Urothan(meth)acrylat-Prepolymer PU mit wenigstens zwei Doppelbindungen pro Molekül, das eine viskosität im Bereich von 250 bis 11.000 mPa.s, bestimmt mit einem Rotations-Viskosimeter nach DIN EN ISO 3219, aufweist und wenigstens einem Reaktivverdünner, auf das zu beschichtende Substrat aufbringt und die so erhaltene feuchte Beschichtung unter Inertgasatmosphäre durch Einwirkung ultravioletter Strahlung aushärtet.

Unter dem Begriff Inertgasatmosphäre versteht man eine im Wesentlichen sauerstofffreie Atmosphäre chemisch inerter Gase, wie Stickstoff, Kohlenmonoxid, Kohlendioxid und Edelgase, z. B. Arggon, oder Mischungen der vorgenannten Gase. Inertgase enthalten in der Regel nicht mehr als 2.000 ppm Verunreinigugnen und üblicherweise nicht mehr als 500 ppm Sauerstoff. Diese geringe Sauerstoffspuren beeinträchtigen den erfindungsgemäßen Effekt nicht. Auch Sauerstoffmengen bis zu 2 vol.-% führen nicht zur Beeinträchtigung des erfindungsgemäßen Effekts. Höhere Stickstoffqualitäten enthalten weniger als 10 ppm Sauerstoff. Typische Argonqualitäten enthalten weniger als 6 ppm O₂₋ Bevorzugtes Inertgas ist Stickstoff.

Die im erfindungsgemäßen Verfahren eingesetzten UV-härtbaren Beschichtungsmittel enthalten als photochemisch vernetzbare Bestandteile und damit als Bilder der Lackschicht eine Mischung von wenigstens einem aliphatischen Urethan(meth)acrylat-Prepolymer PU mit wenigstens zwei Doppelbindungen pro Molekül, das eine wie oben definierte Viskosität aufweist, und wenigstens einem Reaktivverdünner, vorzugsweise ausgewählt unter di- und polyfunktionellen Estern der Acrylsäure und/oder der Methacrylsäure mit aliphatischen Diolen oder Polyolen (Reaktivverdünner R).

Unter aliphatischen Urethan(meth)acrylat-Prepolymeren versteht man polymere oder oligomere Verbindungen, die Urethangruppen und Acryloxyalkyl- bzw. Methacryloxyalkyl-Gruppen oder (Meth)acrylamidoalkyl-Gruppen aufweisen. Üblicherweise sind die (Meth)acryloxyalkyl- bzw. die (Meth)acrylamidoalkylgruppen über das Sauerstoffatom der Urethangruppe gebunden. Unter Acryloxyalkyl-Gruppen sind C₁-C₁₀-Alkylreste, vorzugsweise C₂-C₅-Alkylreste, zu verstehen, die mit einer, zwei oder drei, vorzugsweise mit einer Acryloxygruppe substituiert sind. Selbiges gilt für Methacryloxyalkylgruppen. Dementsprechend versteht man unter (Meth)acrylamidoalkylgruppen C₁-C₁₀-Alkylreste, vorzugsweise C₂-C₅-Alkylreste, die mit einer, zwei oder drei (Meth)acrylamidogruppen, vorzugsweise mit einer (Meth)acrylamidogruppe substituiert sind. Erfindungsgemäß weisen die aliphatischen Urethan(meth)acrylat-Prepolymere PU wenigstens zwei Doppelbindungen pro Molekül, vorzugsweise drei bis sechs Doppelbindungen pro Molekül auf. Die erfindungsgemäßen aliphatischen urethan(meth)acrylat-Prepolymere PU sind im wesentlichen frei von aromatischen strukturelementen, wie Phenylen oder Naphthylen oder substituierten Phenylen- oder Naphthylen-Gruppen.

Die als Bindemittel eingesetzten Urethan(meth)acrylat-Prepolymere bzw. Oligomere PU weisen üblicherweise ein zahlenmittleres Molekulargewicht M_{N} im Bereich von 500 bis 5.000, vorzugsweise im Bereich von 500 bis 2.000 Dalton auf (stimmt mittels GPC anhand authentischer vergleichsproben). Das Doppelbindungsäquivalentgewicht (g Polymer pro darin enthaltener Doppelbindung) liegt vorzugsweise im Bereich von 250 bis 2.000 und insbesondere im Bereich von 300 bis 900.

Die erfindungsgemäß zur Anwendung kommenden Mischungen der Prepolymere PU mit dem Reaktivverdünner R weisen vorzugsweise eine Viskosität (bestimmt mit einem Rotations-Viskosimeter nahc DIN EN ISO 3219) im Bereich von 2.000 bis 7.000 mPa.s auf.

Die aliphatischen Urethan(meth)acrylat-Prepolymere sind dem Fachmann grundsätzlich bekannt und können, wie beispielsweise auf die in der EP-A-203 161 beschriebe weise hergestellt werden. Auf diese Schrift wird, soweit sie die Urethan(meth)acrylat-Prepolymere und ihre Herstellung betrifft, in vollem Umfang Bezug genommen.

Erfindungsgemäß bevorzugt zur Anwendung kommende Urethan(meth)acrylat-Prepolymere sind erhältlich, indem man wenigstens 25 % der Isocyanatgruppen einer Isocyanatgruppen enthaltenden Verbindung (Komponente A) mit wenigstens einem Hydroxyalkylester der Acrylsäure und/oder der Methacrylsäure (Komponente B) und gegebenenfalls mit einer oder mehreren weiteren Verbindungen, die wenigstens eine gegenüber Isocyanatgruppen reaktive funktionelle Gruppe aufweisen (Komponente C), umsetzt.

Die relativen Mengen an Komponente A, B und C werden dabei bevorzugt so gewählt, dass
1, das Äquivalentverhältnis der Isocyanatgruppen in Komponente A zu den reaktiven Gruppen in Komponente C zwischen 3:1 und 1:2, bevorzugt zwischen 3:1 und 1,1:1 und insbesondere bei etwa 2:1 liegt und
2. die Hydroxygruppen der Komponente B der stöchiometrischen Menge der freien Isocayanatgruppen der Komponente A, d. h. der Differenz aus der Gesamtzahl der Isocyanatgruppen der Komponente A abzüglich der reaktiven Gruppen der Komponente C (bzw. abzüglich der zur Reaktion gebrachten reaktiven Gruppen der Komponente C, sofern nur ein Teilumsatz der reaktiven Gruppen der Komponente C beabsichtigt ist) entsprechen.

Bevorzugt enthält das Bindemittel keine freien Isocyanatgruppen mehr. In einer vorteilhaften Ausführungsform wird daher die Komponente B im stöchiometrischen Verhältnis mit den freien Isocyanatgruppen der Komponente A umgesetzt.

Die Urethan(meth)acrylat-Prepolymere können auch in der Weise hergestellt werden, dass man zunächst einen Teil der Isocyanatgruppen eines niedermolekularen Di- oder Polyisocyanats als Komponente A mit mindestens einem Hydroxyalkylester einer ethylenisch ungesättigten Carbonsäure als Komponente B umsetzt und die restlichen Isocyanatgruppen anschließend mit einem Kettenverlängerungsmittel (Komponente C1) umsetzt. Dabei können auch Gemische von Kettenverlängerungsmitteln eingesetzt werden. Auch in diesem Fall werden die relativen Mengen an Komponente A, B und C so gewählt, dass das Äquivalentverhältnis der Isocyanatgruppen zu den reaktiven Gruppen des Kettenverlängerungsmittels zwischen 3:1 und 1:2, bevorzugt bei 2:1 liegt und das Äquivalentverhältnis der restlichen Isocyanatgruppen zu den Hydroxygruppen des Hydroxyalkylesters 1:1 beträgt.

Unter Isocyanatgruppen enthaltende Verbindungen versteht man hier und im Folgenden niedermolekulare, aliphatische Di- oder Polyisocyanate sowie aliphatische, Isocyanatgruppen enthaltende Polymere oder Oligomere (Prepolymer) mit wenigstens zwei und vorzugsweise drei bis sechs freien Isocyanatgruppen pro Molekül. Die Grenzen zwischen den niedermolekularen Di- oder Polyisocyanaten bzw. den Isocyanatgruppen enthaltenden Prepolymeren ist fließend. Typische Isocyanatgruppen enthaltende Prepolymere weisen in der Regel ein zahlenmittleres Molekulargewicht Mₙ im Bereich von 300 bis 5.000 Dalton, vorzugsweise im Bereich von 400 bis 2.000 Dalton auf. Die niedermolekularen Di- oder Polyisocyanate weisen vorzugsweise ein Molekulargewicht unterhalb 400 Dalton, insbesondere unterhalb 300 Dalton auf.

Typische niedermolekulare aliphatische Di- oder Polyisocyanate sind Tetramethylendiisocyanat, Hexamethylendiisocyanat, Octamethylendiisocyanat, Decamethylendiisocyanat, Dodecamethylendiisocyanat, Tetradecamethylendiisocyanat, 1,6-Diisocyanato-2,2,4-trimethylhexan, 1,6-Diisocyanato-2,2,4,4-tetramethylhexan, 1,2-, 1,3- oder 1,4-Diisocyanatocyclohexan, 4,4'-Di(isocyanatocyclohexyl)methan, 1-Isocyanato-3,3,5-trimethyl-S-(isocyanatomethyl)cyclohexan (= Isophorondiisocyanat), 2,4- oder 2,6-Diisocyanato-1-methylcyclohexan, sowie die Biurethe, Cyanurate und Allophanate der vorgenannten Diisocyanate.

Bei den Isocyanuratgruppen aufweisenden Polyisocyanaten handelt es sich insbesondere um einfache Trisisocyanato-Isocyanurate, welche cyclische Trimere der Diisocyanate darstellen, oder um Gemische mit ihren höheren, mehr als einen Isocyanuratring aufweisenden Homologen. Beispeilhaft seien hier das Isocyanurat des Hexamethylendiisocyanats und das Cyanurat des Toluoldiisocyanats genannt, die im Handel erhältlich sind. Cyanurate werden bevorzugt bei der Herstellung von Urethan(meth)acrylaten eingesetzt.

Isocyanatgruppen enthaltende Polymere bzw. Oligomere sind z. B. dadurch erhältlich, dass man eines der vorgenannten niedermolekularen Di- oder Polyisocyanate mit einer Verbindung umsetzt, die wenigstens zwei gegenüber Isocyanatgruppen reaktive funktionelle Gruppen aufweist. Derartige Verbindungen werden auch als Kettenverlängerungsmittel bezeichnet (Komponente C1) und zählen zur Komponente C.

Geeignete Hydroxyalkylester der Acrylsäure und der Methacrylsäure (Komponente B) sind die Halbester der Acrylsäure bzw. der Methacrylsäure mit C₂-C₁₀-Alkandiolen, wie 2-Hydroxyethylacrylat, 2-Hydroxyethylmeth-acrylat, 3-Hydroxypropylacrylat, 3-Hydroxyproplylmethacrylat, 4-Hydroxybutylacrylat und 4-Hydroxybutylmethacrylat. Neben den oder anstelle der Hydroxyalkylestern der Acrylsäure und/oder der Methacrylsäure können zur Einführung von Doppelbindungen in das Urethan(meth)acrylat-Prepolymer PU auch andere hydroxylgruppenhaltige Ester der Acrylsäure bzw. der Methacrylsäure, wie Trimethylolpropandiacrylat bzw. Dimethacrylat sowie Hydroxygruppen tragende Amide der Acrylsäure und der Methacrylsäure, wie 2-Hydroxy-ethylacrylamid und 2-Hydroxyethylmethacrylamid eingesetzt werden.

Geeignete Kettenverlängerungsmittel (Komponente C1) sind aliphatische Di- oder Polyole mit bis zu 20 Kohlenstoffatomen, wie Ethylenglykol, Diethylenglykol, Propylenglykol, Dipropylenglykol, 1,4-Butandiol, 1,5-Pentandiol, Neopentylglykol, 1,6-Hexandiol, 2-Methyl-1,5-pentandiol, 2-Ethyl-1,4-butandiol, 2,2-Bis(4'-hydroxycyclohexyl)propan, Dimethylolcyclohexan, Glycerin, Trimethylolethan, Trimethylolpropan, Trimethylolbutan, Pentaerythrit, Trimethylolpropan, Erythrit und Sorbit; Di- oder Polyamine mit bis zu 20 Kohlenstoffatomen, wie Ethylendiamin, 1,3-Propandiamin, 1,2-Propandiamin, Neopentandiamin, Hexamethylendiamin, Octamethylendiamin, Isophorondiamin, 4,4'-Diaminodicyclohexylmethan, 3,3'-Dimethyl-4,4'-diaminodicyclohexylmethan, 4,7-Dioxadecan-1,10-diamin, 4,9-Dioxadodecan-1,12-diamin, 4,7,10-Trioxatridecan-1,13-diamin, 2-(Ethylamino)-ethylamin, 3-(Methyl-amino)propylamin, Diethylentriamin, N3-Amin(3-(2-Aminoethyl)aminopropylamin), Dipropylentriamin oder N4-Amin(N,N'-Bis(3-aminopropyl)-ethylendiamin); Alkanolamine bis zu 20 Kohlenstoffatomen, wie Monoethanolamin, 2-Amino-1-propanol, 3-Amino-1-propanol, 2-Amino-1-butanol, Isopropanolamin, 2-Amino-2-methyl-1-propanol, 5-Amino-1-pentanol, 2-Amino-1-pentanol, 6-Aminohexanol, Methyl-aminoethanol, 2-(2-Aminoethoxy)ethanol, N-(2-Aminoethyl)ethanol-amin, N-Methylethanolamin, N-Ethylethanolamin, N-Butylethanol-amin, Diethanolamin, 3-(2-Hydroxyethylamino)-1-propanol oder Di-isopropanolamin. Di- oder Polymercaptane mit bis zu 20 Kohlenstoffatomen, wie 1,2-Ethandithiol, 1,3-Propandithiol, 1,4-Butandithiol, 2,3-Butandithiol, 1,5-Pentandithiol, 1,6-Hexantithiol, 1,8-Octandithiol, 1,9-Nonandithiol, 2,3-Dimercapto-1-propanol, Dithiothreitol, Dithioerythritol, 2-Mercaptoethylether oder 2-Mercaptoethylsulfide. Geeignet als Kettenverlängerungsmittel sind weiterhin oligomere Verbindungen mit zwei oder mehreren der vorgenannten reaktiven funktionellen Gruppen, beispielsweise Hydroxygruppen enthaltende Oligomere, wie Polyether, Polyester oder Hydroxy-Gruppen enthaltende Acrylat-/Methacrylat-Copolymere. Oligomere Kettenverlängerungsmittel sind in der Literatur umfangreich beschrieben und weisen in der Regel Molekulargewichte im Bereich von 200 bis 2.000 Dalton auf. Bevorzugte Kettenverlängerungsmittel sind die Di- oder Polyole mit bis zu 20 Kohlenstoffatomen, insbesondere die aliphatischen Diole mit 6 bis 20 Kohlenstoffatomen, z. B. Ethylenglykol, Diethylenglykol, Neopentylglykol und 1,6-Hexandiol.

Zur Komponente C zählen weiterhin Verbindungen C2, die eine Flexibilisierung der UV-gehärteten Beschichtung bewirken. Eine Flexibilisierung kann auch dadurch erreicht werden, dass zumindest ein Teil der freien Isocyanatgruppen des Bindemittels mit Hydroxyalkylestern und/oder Alkylaminamiden längerkettiger Dicarbonsäuren, vorzugsweise aliphatischen Dicarbonsäuren mit mindestens 6 Kohlenstoffatomen, umgesetzt sind. Beispiele für geeignete Dicarbonsäuren sind Adipinsäure, Sebacinsäure, Dodecandisäure und/oder Dimerfettsäuren. Die Flexibilisierungsreaktionen können jeweils vor oder auch nach der Addition der Komponente B an die Isocyanatgruppen enthaltenden Prepolymere durchgeführt werden. Eine Flexibilisierung wird auch erreicht, wenn man als Kettenverlängerungsmittel C1 längerkettige aliphatische Diole und/oder Diamine, insbesondere aliphatische Diole und/oder Diamine mit mindestens 6 Kohlenstoffatomen einsetzt.

Das Beschichtungsmittel enthält weiterhin einen oder mehrere Reaktivverdünner. Reaktivverdünner sind niedermolekulare, flüssige Verbindungen, die wenigstens eine, polymerisierbare, ethylenisch ungesättigte Doppelbindung aufweisen. Eine Übersicht über Reaktivverdünner findet man z. B. in J. P. Fouassier (Brsg.), Radiation Curing in Polymer Science and Technology, Elsevier Science Publisher Ltd., 1993, Vol. 1, p 237-240. Bevorzugt werden Reaktivverdünner R auf Basis von Estern der Acrylsäure bzw. der Methacrylsäure mit aliphatischen Di- oder Polyolen, wobei wenigstens zwei der OH-Gruppen der Di- oder Polyole mit Acrylsäure bzw. Methacrylsäure verestert sind (Reaktivverdünner R). Geeignete aliphatische Di- oder Polyole weisen in der Regel 2 bis 20 Kohlenstoffatome auf und können ein lineares, verzweigtes oder cyclisches Kohlenstoffgerüst haben. Sie enthalten vorzugsweise keine funktionellen Gruppen. Abgesehen von ein oder zwei Ethersauerstoffen weisen sie vorzugsweise keine Beteroatome auf. Beispiele für derartige Reaktivverdünner sind Butandioldiacrylat, Hexandioldiacrylat, Octandioldiacrylat, Dekandioldiacrylat, Cyclohexandioldiacrylat, Trimethylolpropantriacrylat, Pentaerythrittetraacrylat, Dipentaerythrit-penta/hexaacrylat, Dipropylenglykoldiacrylat sowie die entsprechenden Ester der Methacrylsäure und die unter den Laromer®-Marken der BASF AG verkauften Produkte LR 8887, PO 33F, LR 8967, LR 8982.

Daneben kann das erfindungsgemäß eingesetzte Beschichtungsmittel weitere Reaktivverdünner enthalten, die von den vorgenannten Reaktivverdünnern R verschieden sind. Derartige Reaktivverdünner sind ebenfalls mono-, di- oder polyungesättigte Verbindungen. Sie dienen üblicherweise zur Beeinflussung der Viskosität und der lacktechnischen Eigenschaften, wie beispielsweise der Vernetzungsdichte. Beispiele für derartige Verbindungen sind (Meth)Acrylsäure und deren C₁-C₁₀-Alkylester, Maleinsäure und deren C₁-C₁₀-Alkylester bzw. Halbester, Vinylacetat, Vinylether, Divinylharnstoffe, Polyethylenglykol-di(meth)acrylat, Vinyl(meth)acrylat, Allyl(meth)acrylat, Styrol, Vinyltoluol, Divinylbenzol, Tris(acryloyloxymethyl)isocyanurat, Ethoxyethoxyethylacrylat, N-Vinylpyrrolidon, Phenoxyethylacrylat, Dimethylaminoethylacrylat, Hydroxyethyl(meth)acrylat, Butoxyethylacrylat, Isobornyl(meth)acrylat, Dimethylacrylamid und Dicyclopentylacrylat, sowie die in der EP 0 250 631 A1 beschriebenen, langkettigen linearen Diacrylate mit einem Molekulargewicht von 400 bis 4.000, bevorzugt von 600 bis 2.500 Dalton. Einsetzbar ist außerdem das Umsetzungsprodukt von 2 Molen Acrylsäure mit einem Mol eines Dimerfettalkohols, der im Allgemeinen 36 Kohlenstoffatome aufweist. Geeignet sind auch Gemische der genannten Monomeren.

Die kratzfesten, witterungsstabilen Beschichtungsmittel enthalten in der Regel 0,1 bis 5 Gew.-%, bevorzugt 0,1 bis 2 Gew.-%, insbesondere 0,2 bis 1 Gew.-% wenigstens eines Photoinitiators, der die Polymerisation ethylenisch ungesättigter Doppelbindungen initiieren kann. Hierzu zählen Benzophenon und Benzophenonderivate, wie 4-Phenylbenzophenon und 4-Chlorobenzophenon, Michelers Keton, Anthron, Acetophenonderivate, wie 1-Benzoylcyclohexan-1-ol, 2-Hydroxy-2,2-dimethylacetophenon und 2,2-Dimethoxy-2-phenylacetophenon, Benzoin und Benzoinether, wie Methyl-, Ethyl- und Butylbenzoinether, Benzilketale, wie Benzildimethylketal, 2-Methyl-1-(4-methyl-thio-phenyl)-2-morpholinopropan-1-on, Anthrachinon und seine Derivate, wie β-Methylanthrachinon und tert.-Butylanthrachinon, Acylphospinoxide, wie 2,4,6-Trimethylbenzoyldiphenylphosphinoxid, Ethyl-2,4,6-trimethylbenzoylphenylphosphinat und Bisacylphosphinoxide. Derartige Initiatoren sind beispielsweise die im Handel unter den Marken Irgacure® 184, Darocure® 1173 der Firma Ciba Geigy, Genocure® der Firma Rahn oder Lucirin® TPO der Firma BASF AG erhältlichen Produkte. Bevorzugte Photoinitiatoren sind auch Phenylglyoxalsäure, deren Ester und deren Salze, die auch in Kombination mit einem der vorgenannten Photoinitiatoren eingesetzt werden können. Wegen weiterer Details sei hiermit auf die deutsche Patentanmeldung P 198 267 12.6 in vollem Umfang Bezug genommen.

Ferner können die erfindungsgemäßen, strahlungshärtbaren Zubereitungen je nach Verwendungszweck bis zu 35 Gew.-% übliche Hilfsmittel, wie Verdicker, Verlaufshilfsmittel, Entschäumer, UV-Stabilisatoren, Gleitmittel und Füllstoffe enthalten. Geeignete Hilfsmittel sind dem Fachmann hinreichend aus der Lack-Beschichtungs-Technologie bekannt. Geeignete Füllstoffe umfassen Silikate, z. B. durch Hydrolyse von Siliciumtetrachlorid erhältliche Silikate, wie Aerosil® der Fa. Degussa, Kieselerde, Talkum, Aluminiumsilikate, Magnesiumsilikate, Calciumcarbonate etc. Geeignete Stabilisatoren umfassen typische UV-Absorber, wie Oxanilide, Triazine und Benzotriazol (letztere erhältlich als Tinuvin®-Marken der Ciba-Spezialitätenchemie) und Benzophenone. Diese können alleine oder zusammen mit geeigneten Radikalfängern, beispielsweise sterisch gehinderten Aminen, wie 2,2,6,6,-Tetramethylpiperidin, 2,6-Di-tert.-butylpiperidin oder deren Derivate, z. B. Bis-(2,2,6,6-tetramethyl-4-piperidyl)sebacinat eingesetzt werden. Stabilisatoren werden üblicherweise in Mengen von 0,1 bis 5,0 Gew.-% und vorzugsweise 0,5 bis 3,5 Gew.-%, bezogen auf das Beschichtungsmittel, eingesetzt.

Vorzugsweise enthalten die erfindungsgemäß verwendeten Beschichtungsmittel, bezogen auf das Gesamtgewicht des Beschichtungsmittels, ohne Pigmente und Füllstoffe:
- wenigstens 5 Gew%,: insbesondere wenigstens 20 Gew.-% und speziell 30 bis 80 Gew.-% wenigstens eines aliphatischen Urethan(meth)acrylat-Prepolymers PU;
- 10-95 Gew.-%,: insbesondere 10 bis 80 Gew.-% und speziell 20 bis 70 Gew.-% wenigstens eines Reaktivverdünners R;
- 0,1 - 5 Gew.-%: wenigstens eines Photoinitiators; sowie gegebenenfalls
- 0 - 20 Gew.-%: weitere Reaktivverdünner und
- 0 - 15 Gew.-%,: vorzugsweise 2 - 9 Gew.-%, für Beschichtungsmittel übliche Zusatzstoffe.

Die Gesamtmenge an Reaktivverdünner beträgt vorzugsweise nicht mehr als 80 Gew.-%, Sofern als Reaktivverdünner R ein Diacrylat oder Dimethacrylat eingesetzt wird, enthält das Beschichtungsmittel insbesondere 20 bis 80 Gew.-% Reaktivverdünner und speziell diesen Reaktivverdünner R als alleinigen Reaktivverdünner, wird als Reaktivverdünner R eine Verbindung mit mehr als zwei Acrylat- bzw. Methacrylatgruppen verwendet, so setzt man R vorzugsweise in einer Menge von 5 bis 60 Gew.-%, vorzugsweise 10 bis 50 Gew.-%, ein.

Die vorstehend beschriebenen Beschichtungsmittel sind flüssige Zubereitungen und können als solche in der hierfür üblichen Weise ohne Zusatz von Lösungsmitteln appliziert werden.

Die erfindungsgemäßen Beschichtungsmittel kommen insbesondere als Klarlacke zum Einsatz, so dass sie üblicherweise keine oder nur transparente Füllstoffe und keine deckenden Pigmente enthalten. Es ist aber auch der Einsatz in Form von pigmentierten Beschichtungsmitteln möglich. In diesem Fall enthalten die Beschichtungsmittel 2 bis 40 Gew.-%, bezogen auf das Gesamtgewicht des Beschichtungsmittels, eines oder mehrerer Pigmente.

Ferner können die Beschichtungsmittel noch 1 bis 30 Gew.-%, bezogen auf das Gesamtgewicht des Beschichtungsmittels, eines oder mehrerer Füllstoffe enthalten.

Die erfindungsgemäßen Beschichtungen können auch wässrig appliziert werden. Dazu werden entweder ein Teil der Isocyanatgruppen mit Molekülen umgesetzt, die eine gegenüber Isocyanatgruppen reaktive und eine hydrophile, stabilisierende Gruppe, wie Carboxylat oder Sulfonat enthalten, z. B. Dimethylolpropionsäure, Hydroxypivalinsäure oder Sarkosin. Anschließend wird mit Alkali oder Aminen neutralisiert und das Bindemittel im Beschichtungsmittel dispergiert oder mit Schutzkolloiden emulgiert.

Die erfindungsgemäßen Beschichtungsmittel können auf Glas und die unterschiedlichen Metallsubstrate, wie z. B. Aluminium, Stahl, verschiedene Eisenlegierungen u. ä. aufgebracht werden. Bevorzugt werden sie als Klar- oder Decklack z. B. im Bereich des Coil-Coatings und der Automobildecklacke eingesetzt.

Die Beschichtungsmittel können auch auf anderen Substraten, wie Holz, Papier, Kunststoffe, mineralischen Untergründen und ähnlichem appliziert werden. Sie sind ferner auch als Beschichtung von Verpackungsbehältern sowie für Beschichtungen von Folien z. B. für die Möbelindustrie einsetzbar.

Zur Herstellung von Beschichtungen auf Metallsubstraten werden die erfindungsgemäßen Beschichtungsmittel bevorzugt auf grundierte oder mit einem Basislack beschichtete Metallbleche bzw. Metallbänder appliziert. Als Grundierungen können die üblicherweise eingesetzten Basislacke verwendet werden. Als Basislack kommen sowohl konventionelle als auch wässrige Basislacke zum Einsatz. Ferner ist es auch möglich, die erfindungsgemäßen Beschichtungsmittel auf Metallsubstrate zu applizieren, die zunächst mit einer Elektrotauchlackierung und anschließend mit einer Funktionsschicht und naß-in-naß mit einem Basislack beschichtet werden. Bei den genannten verfahren ist es im Allgemeinen erforderlich, dass der Basislack und der Füller bzw. die Funktionsschicht vor Applikation des erfindungsgemäßen Beschichtungsmittels eingebrannt werden.

Das erfindungsgemäße Verfahren zur Herstellung von Mehrschichtlacken umfasst die folgenden Schritte:
- Aufbringen eines, vorzugsweise pigmentierten, Basislacks auf einer Substratoberfläche;
- Trocknen und/oder Vernetzen der Basislackschicht;
- Aufbringen eines Decklacks; und
- Aushärten des Decklacks durch Bestrahlung mit UV-Licht unter Schutzgasatmosphäre;

Als Decklack wird hierbei ein Beschichtungsmittel auf Basis von Urethan(meth)acrylat-Prepolymeren PU - wie zuvor beschrieben - eingesetzt.

Die Härtung der Lackfilme erfolgt mittels UV-Strahlung unter Inertgasatmosphäre. Die Anlagen und Bedingungen für diese Härtungsmethoden sind aus der Literatur bekannt (vgl. z. B. R. Holmes, UV and EB Curing Formulations for Printing Inks, Coatings and Paints, SITA Technology, Academic Press, London, United Kingdom 1984).

Die erfindungsgemäß erhältlichen Beschichtungsmittel zeichnen sich durch eine gute Oberflächenhärte und eine höhere Kratzfestigkeit gegenüber konventionell ausgehärteten Beschichtungen aus. Sie zeichnen sich zudem durch eine verbesserte Chemikalienresistenz aus.

Die Chemikalienresistenz wird üblicherweise mit den Chemikalien geprüft, mit denen die Beschichtung in Kontakt kommen kann. Bei Holzbeschichtungen sind dies z. B. typische Haushaltschemikalien, wie Kaffee, Senf, oder Rotwein, während Beschichtungen für Kraftfahrzeuge auf ihre Beständigkeit gegenüber Benzin, Säuren, Laugen, Baumharz usw. geprüft werden. Gegenüber den genannten Chemikalien zeigen die erfindungsgemäßen Beschichtungen eine deutlich verbesserte Resistenz.

Nachfolgend wird die Erfindung anhand von Ausführungsbeispielen näher erläutert. Dabei bedeuten alle Teile Gewichtsteile, sofern nicht ausdrücklich etwas anderes angegeben ist.

### 1. Herstellung der urethanacrylathaltigen Beschichtungsmittel

Aus den in Tabelle 1 angegebenen Komponenten werden unter intensivem Rühren mittels eines Disolvers oder eines Rührers die Beschichtungsmittel hergestellt. Mit einem Kastenrakel, Spaltgröße 200 µm, wurden Filme auf gereinigten Glasplatten hergestellt. Die Aushärtung der Film erfolgt an einer IST Beschichtungsanlage (Typ M 40 2x1-R-IR-SLC-So inert) mit 2 UV-Strahlern (Quecksilberhochdrucklampen Typ M 400 U2H und Typ M400 U2HC) und einer Förderband-Laufgeschwindigkeit von 10 m/min. Die Strahlungsdosis beträgt ca. 1800 mJ/cm².

**Tabelle 1:**

| Zusammensetzung der Beschichtungsmittel 1 - 11 | | | | | |
|---|---|---|---|---|---|
| Beschichtungsmittel | LR 8987(1) | THEIC(2) | PHA (3) | HDDA(4) | Irgacure 184 (5) |
| 1(*) | 100 | | | | 4 |
| 2 | 90 | 10 | | | 4 |
| 3 | 70 | 30 | | | 4 |
| 4 | 50 | 50 | | | 4 |
| 5 | 95 | | 5 | | 4 |
| 6 | 90 | | 10 | | 4 |
| 7 | 80 | | 20 | | 4 |
| 8 | 50 | | 50 | | 4 |
| 9 | 80 | | | 20 | 4 |
| 10 | 50 | | | 50 | 4 |
| 11 | 20 | | | 60 | 4 |

| | | | | | |
|---|---|---|---|---|---|
| (1) Laromer® LR 8987: handelstibliche Mischung eines aliphatischen Urethanacrylats mit 30 Gew.-% Hexandioldiacrylat der Firma BASF AG. Molekulargewicht ca. 650 g/mol, Funktionalität ca. 2,8 Doppelbindungen/mol (ca. 4,5 mol/kg), Viskosität 2-6 Pa.s (DIN EN ISO 3219). | | | | | |
| (2) THEIC: Triacrylat des Tri(hydroxyethyl)cyanurats | | | | | |
| (3) PHA: Dipentaerythrit-Penta/Hexaacrylat | | | | | |
| (4) HDDA: Hexandioldiacrylat | | | | | |
| (5) Irgacure® 184 der Firma Ciba Geigy, handelsüblicher Photoinitiatör. | | | | | |
| (*) nicht erfindungsgemäß | | | | | |

### 2. Bestimmung der mechanischen Beständigkeit

von den in Tabelle 1 aufgeführten Beschichtungsmitteln wurden die Pendelhärte nach König, DIN 53 157, ISO 1522, die Erichsen-Tiefung nach DIN 53 156, ISO 1520 und Kratzfestigkeit mit dem Scotch Brite-Test nach Lagerung für 24 Stunden im Klimaraum bestimmt.

Für die Bestimmung der Kratzfestigkeit wurde ein Film auf eine gereinigte, schwarz eingefärbte Glasplatte appliziert. Diese erlaubt die Bestimmung des Glanzabfalls nach entsprechender Beanspruchung. Die Aushärtung mit UV-Strahlung erfolgte unter Stickstoffatmosphäre (Tabelle 2a) sowie unter Luft (Tabelle 2b).
Im Scotch Brite-Test wird als Prüfkörper ein 3 x 3 cm großes Siliciumcarbid modifizierter Faserflies (Scotch Brite SUFN, 3M Deutschland, 41453 Neuß) an einem Zylinder befestigt. Dieser Zylinder drückt das Faserflies mit 750 g an die Beschichtung und wird pneumatisch über die Beschichtung bewegt. Die Wegstrecke der Auslenkung beträgt 7 cm. Nach 10 bzw. 50 Doppelhüben (DH) wird im mittleren Bereich der Beanspruchung der Glanz (Sechsfachbestimmung) analog DIN 67530, ISO 2813 bei einem Einfallswinkel von 60° gemessen und und die Differenz zum Glanzwert vor Behandlung gebildet (Δ-Glanz-Wert). Der Δ-Glanz-Wert ist umgekehrt proportional zur Kratzfestigkeit.

**Tabelle 2a:**

| Prüfergebnisse der Beschichtungen 1 bis 11 bei Härtung unter Stickstoffatmosphäre (O₂ ≤ 500 ppm, bestimmt mittles einer Galvanoflux-Sonde - elektrochemische Zelle auf Basis eines Blei/Bleioxid-Redoxpaares) | | | | |
|---|---|---|---|---|
| | Kratzfestigkeit ¹⁾ (Δ-Glanz-Wert) | | Pendeldämpfung ²⁾ | Erichsen-Tiefung ³⁾ |
| Beispiel | 10DH | 50DH | (s) | (mm) |
| 1(*) | 4,5 | 6,1 | 172 | 3,5 |
| 2 | 3,3 | 6,3 | 176 | 0,7 |
| 3 | 5,4 | 9,1 | 189 | 0,9 |
| 4 | 3,9 | 6,0 | 189 | 0,9 |
| 5 | 3,1 | 5,1 | 181 | 0,9 |
| 6 | 2,7 | 4,3 | 175 | 0,8 |
| 7 | 2,2 | 3,7 | 183 | 0,6 |
| 8 | 0,6 | 1,3 | 182 | 0,5 |
| 9 | 3,7 | 5,5 | 178 | 2,3 |
| 10 | 2,7 | 6,0 | 172 | 1,2 |
| 11 | 2,0 | 5,1 | 185 | 0,8 |

| | | | | |
|---|---|---|---|---|
| (*) nicht erfindungsgemäß | | | | |

**Tabelle 2b:**

| Prüfergebnisse der Beschichtungen 1 bis 11 bei Härtung unter Luft (Beispiele V1 bis V11) | | | | |
|---|---|---|---|---|
| | Kratzfestigkeit ¹⁾ (Δ-Glanz-Wert) | | Pendeldämpfung ²⁾ | Erichsen-Tiefung ³⁾ |
| Beispiel | 10DH | 50DH | (s) | (mm) |
| V1 | 38,2 | 33,8 | 175 | 3,3 |
| V2 | 31,4 | 39,1 | 171 | 3,0 |
| v3 | 21,9 | 39,4 | 186 | 3,2 |
| V4 | 20,5 | 35,6 | 186 | 1,5 |
| V5 | 26,2 | 37,5 | 176 | 2,5 |
| V6 | 30,0 | 40,8 | 171 | 2,1 |
| V7 | 22,5 | 35,0 | 182 | 0,8 |
| V8 | 8,3 | 14,8 | 175 | 0,6 |
| V9 | 40,6 | 41,5 | 165 | 3,0 |
| V10 | n.m.⁴ | n.m.⁴ | 174 | 2,2 |
| V11 | n.m.⁴ | n.m.⁴ | n.m.⁴ | n.m.⁴ |

| | | | | |
|---|---|---|---|---|
| (1) Δ Glanz nach Scotch-Brite Behandlung nach 10 bzw. 50 Doppelhüben (DH) | | | | |
| (2) Pendelhärte nach König, DIN 53 157, ISO 1522 | | | | |
| (3) Erichsen-Tiefung, DIN 53 156, ISO 1520 | | | | |
| (4) nicht messbar | | | | |

### 3. Prüfung der Beständigkeit gegen Chemikalien

Die Beschichtungen mit den Zusammensetzungen der Beispiele 1 und 8 aus Tabelle 1 werden in einer Schichtdicke von ca. 40 µm auf ein Blech aufgebracht, unter der angegebenen Atmosphäre mit einer Bandgeschwindigkeit von 10 m/min unter 120 W Lampen gehärtet. Die angegebenen Chemikalien wurden in einer Reihe aufgetropft und das Blech auf einen Gradientenofen mit einer Temperaturzone von 25 bis 90 °C für 1 Stunde gelegt. Angegeben ist die niedrigste Temperatur, bei der eine Schädigung der Lackoberfläche eintritt; Inspektion nach 24 stunden.

**Tabelle 3:**

| Chemikalienbeständigkeit bei Härtung unter Luft und unter Stickstoff | | | | |
|---|---|---|---|---|
| Beispiel (Atmosphäre) | 1(*)(Luft) | 1(*) (Stickstoff) | 8 (Luft) | 8 (Stickstoff) |
| Wasser | 75 | 75 | 75 | 75 |
| Baumharz | 34 | 75 | 75 | 75 |
| Pankreatin/Wasser 1:1 | 51 | 63 | 36 | 60 |
| Schwefelsäure 1 % | 42 | 66 | 67 | 66 |

| | | | | |
|---|---|---|---|---|
| (*) nicht erfindungsgemäß | | | | |

## Patentansprüche

1. Verfahren zur Herstellung kratzfester Beschichtungen, wobei man wenigstens ein UV-härtbares Beschichtungsmittel, enthaltend als photochemisch vernetzbaren Bestandteil eine Mischung von wenigstens einem aliphatischen Urethan(meth)acrylat-Prepolymer PU mit wenigstens zwei Doppelbindungen pro Molekül, das eine Viskosität im Bereich von 250 bis 11.000 mPa.s, bestimmt mit einem Rotations-Viskosimeter nach DIN EN ISO 3219; aufweist und wenigstens einem Reaktivverdünner, auf das zu beschichtende Substrat aufbringt und die so erhaltene feuchte Beschichtung unter Inertgasatmosphäre durch Einwirkung ultravioletter Strahlung aushärtet.

2. Verfahren nach Anspruch 1, wobei das UV-härtbare Beschichtungsmittel wenigstens einen Reaktivverdünner R, ausgewählt unter di- und polyfunktionellen Estern der Acrylsäure und/oder der Methacrylsäure mit aliphatischen Diolen oder Polyolen, enthält.

3. Verfahren nach Anspruch 1 oder 2, wobei das Beschichtungsmittel, bezogen auf das Gesamtgewicht des Beschichtungsmittels, ohne Pigmente und Füllstoffe:
wenigstens 5 Gew% wenigstens eines aliphatischen Urethan(meth)acrylat-Prepolymers PU
10 - 95 Gew.-% wenigstens eines Reaktivverdünners R;
0,1 - 5 Gew.-% wenigstens eines Photoinitiators; sowie gegebenenfalls
0 - 20 Gew.-% weitere Reaktivverdünner und
0 - 15 Gew.-%, vorzugsweise 2 - 9 Gew.-%, für Beschichtungsmittel übliche Zusatzstoffe,
enthält.

4. verfahren nach einem der vorhergehenden Ansprüche, wobei das Urethan(meth)acrylat-Prepolymer PU ein zahlenmittleres Molekulargewicht im Bereich von 500 bis 5.000 aufweist.

5. Verfahren nach einem der vorhergehenden Ansprüche, wobei das Urethan(meth)acrylat-Prepolymer PU ein Doppelbindungsäquivalentgewicht im Bereich von 250 bis 2.000, vorzugsweise 300 bis 900 Dalton aufweist.

6. Verfahren nach einem der vorhergehenden Ansprüche, wobei das Urethan(meth)acrylat-Prepolymer PU durch sukzessive Umsetzung von wenigstens 25 % der Isocyanatgruppen einer Isocyanatgruppen enthaltenden Verbindung (Komponente A) mit wenigstens einem Hydroxyalkylester der Acrylsäure und/oder der Methacrylsäure (Komponente B) und der gegebenenfalls noch freien Isocyanatgruppen mit wenigstens einer weiteren Verbindung, die wenigstens eine gegenüber Isocyanatgruppen reaktive funktionelle Gruppe aufweist (Komponente C), erhältlich ist.

7. Verfahren nach Anspruch 6, wobei die Komponente A ein Isocyanatgruppen enthaltendes Prepolymer mit wenigstens zwei Isocyanatgruppen pro Molekül ist, welches erhältlich ist durch Umsetzung von wenigstens einem niedermolekularen aliphatischen Di- oder Polyisocyanat mit einer Verbindung, die wenigstens zwei gegenüber Isocyanatgruppen reaktive funktionelle Gruppen aufweist, wobei das Verhältnis von Isocyanatgruppen zu funktionellen Gruppen im Bereich von 3:1 bis 1:2 liegt.

8. Verfahren nach Anspruch 6 oder 7, wobei die Isocyanatgruppen der Komponente A im stöchiometrischen verhältnis mit den OH-Gruppen der Komponente B umgesetzt sind.

9. Verfahren nach Anspruch 6 oder 7, wobei zumindest ein Teil der freien Isocyanatgruppen des Urethan(meth)acrylat-Prepolymers PU mit Molekülen umgesetzt ist, die eine gegenüber Isocyanatgruppen reaktive Gruppe und eine hydrophile, stabilisierende Gruppe enthalten.

10. Verfahren nach Anspruch 6 oder 7, wobei zumindest ein Teil der freien Isocyanatgruppen des Urethan(meth)acrylat-Prepolymers PU mit Hydroxyalkylestern und/oder Alkylaminamiden von aliphatischen Dicarbonsäuren mit mindestens 6 Kohlenstoffatomen, umgesetzt sind.

11. Verfahren nach einem der vorhergehenden Ansprüche, wobei das Beschichtungsmittel, bezogen auf das Gesamtgewicht des Beschichtungsmittels, 2 - 40 Gew.-% eines oder mehrerer Pigmente enthält.

12. Verfahren nach einem der vorhergehenden Ansprüche, wobei das Beschichtungsmittel, bezogen auf das Gesamtgewicht des Beschichtungsmittels, 1 - 30 Gew.-% eines oder mehrerer Füllstoffe enthält.

13. Verfahren nach einem der vorhergehenden Ansprüche, wobei die kratzfeste Beschichtung als Mehrschichtlack ausgebildet ist, umfassend die folgenden Schritte:
i. Aufbringen eines, vorzugsweise pigmentierten, Basislacks auf einer Substratoberfläche;
ii. Trocknen und/oder Vernetzen der Basislackschicht;
iii. Aufbringen eines Decklacks, wobei man als Decklack ein Beschichtungsmittel wie in einem der Ansprüche 1 bis 12 definiert, verwendet;
iv. Aushärten des Decklacks durch Bestrahlung mit UV-Licht unter Schutzgasatmosphäre.

14. Verfahren nach einem der vorhergehenden Ansprüche, wobei das zu beschichtende Substrat eine metallische Oberfläche aufweist.

## Claims

1. A process for producing scratch-resistant coatings, which comprises applying at least one UV-curable coating composition comprising as its photochemically crosslinkable constituent a mixture of at least one aliphatic urethane (meth)acrylate prepolymer PU having at least two double bonds per molecule, that has a viscosity in the range from 250 to 11,000 mPa.s, as determined using a rotational viscometer in accordance with DIN EN ISO 3219, and at least one reactive diluent, to the target substrate and curing the resulting wet coating by exposure to ultraviolet radiation under an inert gas atmosphere.

2. A process as claimed in claim 1, wherein said UV-curable coating composition comprises at least one reactive diluent R selected from difunctional and polyfunctional esters of acrylic acid and/or methacrylic acid with aliphatic diols or polyols.

3. A process as claimed in claim 1 or 2, wherein, based on the overall weight of the coating composition, excluding pigments and fillers, said coating composition comprises:
at least 5% by weight of at least one aliphatic urethane (meth)acrylate prepolymer PU;
10 - 95% by weight of at least one reactive diluent R;
0.1 - 5% by weight of at least one photoinitiator; and, if desired,
0 - 20% by weight of further reactive diluents, and
0 - 15% by weight, preferably 2 - 9% by weight, of additives customary for coating compositions.

4. A process as claimed in any of the preceding claims, wherein said urethane (meth)acrylate prepolymer PU has a number-average molecular weight in the range from 500 to 5000.

5. A process as claimed in any of the preceding claims, wherein said urethane (meth)acrylate prepolymer PU has a double bond equivalent weight in the range from 250 to 2000, preferably from 300 to 900 daltons.

6. A process as claimed in any of the preceding claims, wherein said urethane (meth)acrylate prepolymer PU is obtainable by successive reaction of at least 25% of the isocyanate groups of a compound (component A) containing isocyanate groups with at least one hydroxyalkyl ester of acrylic acid and/or methacrylic acid (component B) and of any remaining free isocyanate groups with at least one further compound (component C) having at least one functional group which is reactive toward isocyanate groups.

7. A process as claimed in claim 6, wherein component A is a prepolymer which contains isocyanate groups and has at least two isocyanate groups per molecule, obtainable by reacting at least one low molecular mass aliphatic diisocyanate or polyisocyanate with a compound having at least two isocyanate-reactive functional groups, the ratio of isocyanate groups to functional groups being in the range from 3:1 to 1:2.

8. A process as claimed in claim 6 or 7, wherein the isocyanate groups of component A have been reacted in stoichiometric ratio with the OH groups of component B.

9. A process as claimed in claim 6 or 7, wherein at least some of the free isocyanate groups of the urethane (meth)acrylate prepolymer PU have been reacted with molecules which contain an isocyanate-reactive group and a hydrophilic, stabilizing group.

10. A process as claimed in claim 6 or 7, wherein at least some of the free isocyanate groups of the urethane (meth)acrylate prepolymer PU have been reacted with hydroxyalkyl esters and/or alkylamine amides of aliphatic dicarboxylic acids having at least 6 carbon atoms.

11. A process as claimed in any of the preceding claims, wherein the coating composition contains 2 - 40% by weight of one or more pigments, based on the overall weight of the coating composition.

12. A process as claimed in any of the preceding claims, wherein the coating composition contains 1 - 30% by weight of one or more fillers, based on the overall weight of the coating composition.

13. A process as claimed in any of the preceding claims, wherein the scratch-resistant coating is designed as a multicoat coating system, comprising the following steps:
i. applying a preferably pigmented basecoat material to a substrate surface;
ii. drying and/or crosslinking the basecoat film;
iii. applying a topcoat material, said topcoat material being a coating composition as defined in any of claims 1 to 12;
iv. curing the topcoat by exposure to UV light under an inert gas atmosphere.

14. A process as claimed in any of the preceding claims, wherein the target substrate has a metallic surface.

## Revendications

1. Procédé de réalisation de revêtements qui résistent aux rayures, dans lequel on apporte sur le support à revêtir au moins un enduit apte à être durci par UV, dont le composant photochimiquement réticulable est un mélange d'au moins un prépolymère aliphatique PU de (méth)acrylate d'uréthane dont chaque molécule présente au moins deux doubles liaisons et dont la viscosité déterminée au moyen d'un viscosimètre à rotation selon DIN EN ISO 3219 est comprise entre 250 et 11 000 mPa.s et d'au moins un diluant réactif, le revêtement humide ainsi obtenu étant durci en le soumettant à l'action d'un rayonnement ultraviolet dans une atmosphère de gaz inerte.

2. Procédé selon la revendication 1, dans lequel l'enduit apte à être durci par UV contient au moins un diluant réactif sélectionné parmi les esters bifonctionnels ou les esters polyfonctionnels d'acide acrylique et/ou d'acide méthacrylique et de diols ou de polyols aliphatiques.

3. Procédé selon la revendication 1 ou 2, dans lequel, par rapport à son poids total hors pigments et charges, l'enduit contient :
- au moins 5 % en poids d'au moins un prépolymère aliphatique PU de (méth)acrylate d'uréthane,
- entre 10 et 95 % en poids d'au moins un diluant réactif R,
- entre 0,1 et 5 % en poids d'au moins un photoinitiateur et éventuellement
- un supplément de 0 à 20 % en poids de diluant réactif et
- entre 0 et 15 % en poids et de préférence entre 2 et 9 % en poids des additifs habituels dans les enduits.

4. Procédé selon l'une des revendications précédentes, dans lequel le poids moléculaire moyen en nombre du prépolymère aliphatique PU de (méth)acrylate d'uréthane est compris dans la plage de 500 à 5 000.

5. Procédé selon l'une des revendications précédentes, dans lequel le poids équivalent des doubles liaisons du prépolymère aliphatique PU de (méth)acrylate d'uréthane est compris dans la plage de 250 à 2 000 et de préférence de 300 à 900 Dalton.

6. Procédé selon l'une des revendications précédentes, dans lequel on obtient le prépolymère aliphatique PU de (méth)acrylate d'uréthane en faisant réagir successivement au moins 25 % des groupes isocyanate d'un composé (composant A) qui contient des groupes isocyanate avec au moins un hydroxyalkylester (composant B) de l'acide acrylique et/ou de l'acide méthacrylique et les groupes isocyanate éventuellement encore libres avec au moins un composé supplémentaire (composant C) qui présente au moins un groupe fonctionnel qui réagit avec les groupes isocyanate.

7. Procédé selon la revendication 6, dans lequel le composant A est un prépolymère dont chaque molécule contient au moins deux groupes isocyanate et que l'on peut obtenir en faisant réagir au moins un diisocyanate ou un polyisocyanate aliphatiques à bas poids moléculaire avec un composé qui présente au moins deux groupes fonctionnels qui réagissent avec les groupes isocyanate, le rapport entre les groupes isocyanate et les groupes fonctionnels étant compris entre 3 : 1 et 1 : 2.

8. Procédé selon la revendication 6 ou 7, dans lequel on fait réagir les groupes isocyanate du composant A dans un rapport stoechiométrique avec les groupes OH du composant B.

9. Procédé selon la revendication 6 ou 7, dans lequel on fait réagir au moins une partie des groupes isocyanate libres du prépolymère aliphatique PU de (méth)acrylate d'uréthane avec des molécules qui contiennent un groupe hydrophile stabilisateur et un groupe qui réagit avec les groupes isocyanate.

10. Procédé selon la revendication 6 ou 7, dans lequel on fait réagir au moins une partie des groupes isocyanate libres du prépolymère aliphatique PU de (méth)acrylate d'uréthane avec des hydroxyalkylesters et/ou des alkylaminamides d'acides dicarboxyliques aliphatiques qui comptent au moins 6 atomes de carbone.

11. Procédé selon l'une des revendications précédentes, dans lequel entre 2 et 40 % du poids total de l'enduit sont constitués d'un ou de plusieurs pigments.

12. Procédé selon l'une des revendications précédentes, dans lequel entre 1 et 30 % du poids total de l'enduit sont constitués d'une ou de plusieurs charges.

13. Procédé selon l'une des revendications précédentes, dans lequel on réalise le revêtement qui résiste aux rayures comme peinture en plusieurs couches et dans lequel on exécute les étapes qui consistent à :
i. apporter sur la surface du support une peinture de base de préférence pigmentée,
ii. sécher et/ou réticuler la couche de peinture de base,
iii. apporter comme couche de recouvrement un enduit tel que celui défini dans l'une des revendications 1 à 12 et
iv. durcir la couche de recouvrement en l'irradiant par des UV dans une atmosphère de gaz protecteur.

14. Procédé selon l'une des revendications précédentes, dans lequel le support à revêtir présente une surface métallique.
